# EUROPEAN PATENT APPLICATION

(11) **EP 4 601 316 A1**
(43) Date of publication of application: **13.08.2025**
(21) Application number: 25155171.9
(22) Date of filing: 31.01.2025
(51) Int. Cl.: H04Q 1/02

(54) **SHIELDED KEYSTONE PATCH PANEL WITH SNAP-IN FACE PLATE**

(30) Priority: 02.02.2024 US 202418430881
(71) Applicant: Panduit Corp., Tinley Park, Illinois 60487 (US)
(72) Inventor: Dragisic, Michael G., Tinley Park (US); Churnovic, Roman J., Tinley Park (US); Fransen, Robert E., Tinley Park (US)
(74) Representative: Bollinghaus, Emer

(57) **Abstract**

A patch panel mountable to a network rack includes a frame and a face plate. The frame defines a set of fastening slots and a plurality of first ports. The face plate defines a plurality of second ports and has a set of fastening tabs. The plurality of second ports of the face plate align with the plurality of first ports of the frame forming a plurality of port modules to receive and support a plurality of cable connectors. The set of tabs are engageable with the set of fastening slots.

## Description

### TECHNICAL FIELD

The present disclosure is generally related to cable management devices for network equipment racks, and more specifically, toward a patch panel.

### BACKGROUND

The statements in this section merely provide background information related to the present disclosure and may not constitute prior art.

Patch panel and network equipment enclosure rack systems are well-known in the telecommunication industry to manage and organize cables employed to transmit data, voice, video and/or audio information. The rack systems are typically configured in accordance with Electronic Industries Alliance (EIA) standards, such as, 19", 23" or other distribution frame rack, and are generally mounted with one or more patch panels, network equipment, fiber optic enclosures, and the like.

The rack systems serve various functions such as slack trays, splice trays, cable organizers and patch panels. The rack systems also serve as interconnect or cross-connect enclosures when they interface with equipment, and may serve as a telecommunications closet, allowing the cables to be terminated, spliced, patched and/or stored at various places along their length.

The rack systems usually have a body or cage having mounting apertures located along the vertical legs or walls of the body. Patching equipment, such as a patch panel, is mounted to a rack to generally define a patching side, where patch cords from another active device or another patch panel can be cross-connected and interconnected, and a distribution side, where cables from network equipment and/or work station areas are terminated.

### SUMMARY

This section provides a general summary of the disclosure and is not a comprehensive disclosure of its full scope or all of its features.

The present disclosure is directed to a patch panel mountable to a network rack. The patch panel may include a frame defining a set of fastening slots and defining a plurality of first ports, and a face plate defining a plurality of second ports and having a set of fastening tabs. The plurality of second ports of the face plate may align with the plurality of first ports of the frame forming a plurality of port modules to receive and support a plurality of cable connectors, and the set of tabs may be engageable with the set of fastening slots.

The present disclosure is directed to a patch panel mountable to a network rack, and may include a frame and a face plate. The frame may define a set of fastening slots and a plurality of first ports. The frame may include a first flange extending from an upper portion of the frame and a second flange extending from a lower portion of the frame opposing the first flange. The face plate may define a plurality of second ports and may include a set of fastening tabs. The plurality of second ports of the face plate may align with the plurality of first ports of the frame forming a plurality of port modules to receive and support a plurality of cable connectors. The first flange and the second flange may extend toward the face plate, and the face plate may be arranged between the first flange and the second flange, and the set of tabs may be engageable with the set of fastening slots of the frame.

The present disclosure may be directed to a patch panel mountable to a network rack, and may include a frame and a face plate. The frame may define a set of fastening slots and a plurality of first ports. The frame may include a first flange extending from an upper portion of the frame and a second flange extending from a lower portion of the frame opposing the first flange. The set of fastening slots may be defined at the upper portion and the lower portion of the frame. The face plate may define a plurality of second ports and may include a set of fastening tabs. The set of fastening tabs may include a first set of fastening tabs at an upper portion of the face plate and a second set of fastening tabs at a lower portion of the face plate and offset from the first set of fastening tabs. The set of fastening slots may include a first set of fastening slots at an upper portion of the frame and a second set of fastening slots at a lower portion of the frame and offset from the first set of fastening slots. The set of tabs may be engageable with the set of fastening slots of the frame. The first flange and the second flange may extend toward the face plate, and the face plate may be arranged between the first flange and the second flange of the frame. With the face plate attached to the frame, the face plate and the frame define a gap therebetween, and the plurality of second ports of the face plate may align with the plurality of first ports of the frame forming a plurality of port modules to receive a plurality of cable connectors, where portions of the cable connectors may extend in the gap with the front faces of the cable connectors align with a front side of the face plate.

Further areas of applicability will become apparent from the description provided herein. It should be understood that the description and specific examples are intended for purposes of illustration only and are not intended to limit the scope of the present disclosure.

### BRIEF DESCRIPTION OF THE DRAWINGS

In order that the disclosure may be well understood, there will now be described various forms thereof, given by way of example, reference being made to the accompanying drawings, in which:
FIG. 1 is a perspective view of an angular patch panel in accordance with the present disclosure.
FIG. 2 is an exploded view of the angular patch panel of FIG. 1.
FIG. 3 is a cross-sectional view of the patch panel along line 3-3 of FIG. 1.
FIG. 4 is a front view of a face plate of the patch panel of FIG. 1.
FIG. 5 is a back view of the face plate of FIG. 4.
FIG. 6 is a perspective view of a straight patch panel in accordance with the present disclosure.
FIG. 7 is an exploded view of the straight patch panel of FIG. 6.
FIG. 8 is a perspective view of another form of an angular patch panel in accordance with the present disclosure.
FIG. 9 is an exploded view of the angular patch panel of FIG. 8.
FIG. 10 is a partial view of a frame of the angular patch panel of FIG. 8.
FIG. 11 is a cross-sectional view of the patch panel along line 11-11 of FIG. 8.
FIG. 12 is a perspective view of another form of a straight patch panel in accordance with the present disclosure.
FIG. 13 is an exploded view of the straight patch panel of FIG. 12.

The drawings described herein are for illustration purposes only and are not intended to limit the scope of the present disclosure in any way.

### DETAILED DESCRIPTION

The following description is merely exemplary in nature and is not intended to limit the present disclosure, application, or uses. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the features of the present disclosure.

Some rack systems are configured to have shielded cable connectors, such as a keystone shielded jack, that are made of metal to reduce or suppress electromagnetic interference (EMI) and/or radio frequency interference (RFI). Patch panels employed to hold the cable connectors are typically made of metal and define multiple port modules for receiving and supporting the shielded cable connectors.

The present disclosure is directed to a patch panel that is configured to support multiple shielded cable connectors, such as the shielded keystone cable connectors. As detailed herein, the patch panel includes a frame that defines a set of fastening slots and a plurality of first ports, and a face plate that defines a plurality of second ports and has a set of fastening tabs. The plurality of second ports of the face plate align with the plurality of first ports of the frame forming a plurality of port modules to receive and support a plurality of cable connectors. In addition, the set of tabs of the face plate are engageable with the set of fastening slots of the frame to fasten the frame and the face plate to each other. That is, the face plate and the frame are secured together using, for example, snap-fit joints to reduce the number of components of the patch panel. The patch panel may be provided as an angular panel having an angular frame or a straight panel having a straight frame. In some examples, the same type of face plate may be used with the angular frame and the straight frame to improve standardization of the patch panels and thus, the rack system.

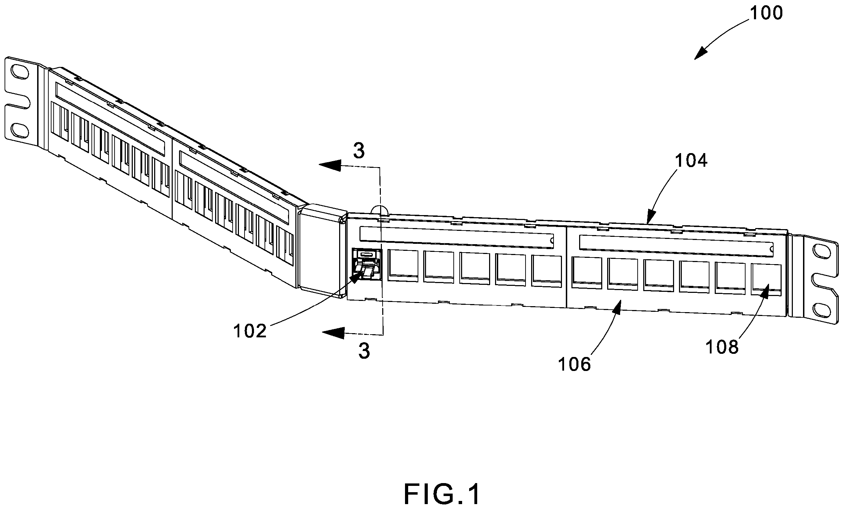

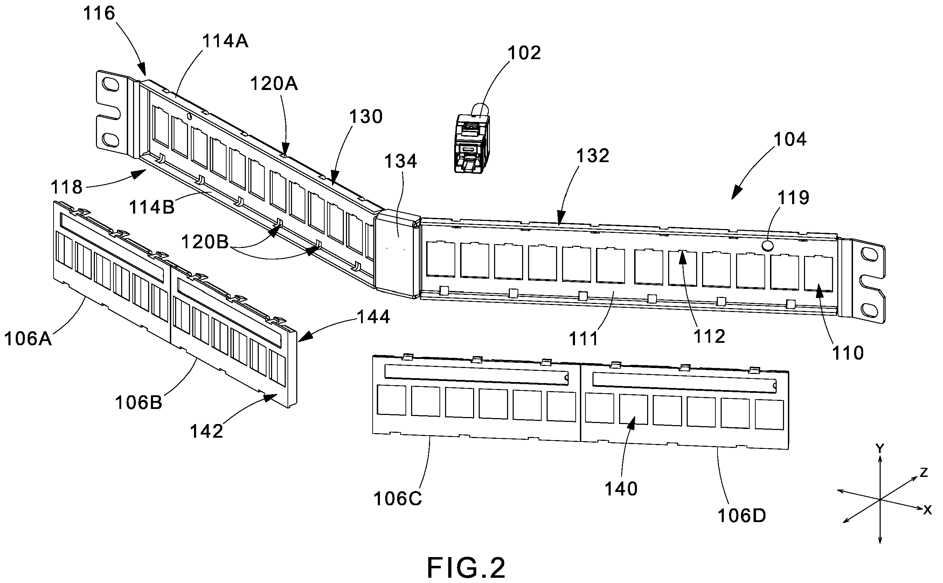

Referring to FIGS. 1 and 2, a patch panel 100 is mountable to a network rack (not shown) and is configured to receive shielded cable connectors 102, such as keystone shielded jacks. For purposes of clarity, the cable connectors 102 are illustrated without a cable extending from the connector 102.

In one example, the patch panel 100 includes a frame 104 and at least one face plate 106 attached to the frame 104 forming a plurality of port modules 108 to receive and support the cable connectors 102. In one example, the frame 104 is made of metal, and the face plate 106 may be made of metal or plastic.

In one example, the frame 104 defines a plurality of first ports 110, where each port 110 has a groove 112 used to remove help remove a cable connector 102 using a tool. The frame 104 further includes a planar member 111 and flanges 114A and 114B (collectively "flanges 114") that protrude from an upper portion 116 and a lower portion 118 of the planar member 111 toward the face plate 106, respectively.

In some examples, the frame 14 defines one or more grounding holes 119 employed to press fit a threaded ground stud allowing the grounding connection between the patch panel and rack.

The frame 104 further defines a set of fastening slots 120A and 120B (collectively "fastening slots 120" or "set of fastening slots"), where one or more fastening slots 120A are provided at the upper portion 116 of the frame 104 and one or more fastening slots 120B are provided at the lower portion 118 of the frame 104. In one example, the fastening slots 120A and 120B are staggered or offset and do not align along a Y-axis of an X-Y-Z coordinate system (i.e., a selected fastening slot 120A is not over a fastening slot 120B). As detailed below, the flanges 114 are configured to receive the face plate 106 via the fastening slots 120, and the staggered orientation of the fastening slots 120A and 120B assist in orientating the face plate 106.

In one example, the frame 104 has an angled body that projects the patch panel 100 outwardly (e.g., toward the Z-axis of the X-Y-Z coordinate system). Specifically, the frame 104 includes a first section 130 and a second section 132 angled relative to the first section 130 by an obtuse angle (e.g., angle between 90° to 180°) in a generally inverted V-shape. The frame 104 further includes a center portion 134 between the first section 130 and the second section 132 to provide additional space between the first ports 110 of the first and the second sections 130 and 132. In one example, the number of first ports 110 provided by the first section 130 and the second section 132 may be the same or may be different.

The face plate 106 defines a plurality of second ports 140, and has a front side 142 facing away from the frame 104 and a back side 144 facing the frame 104. The face plate 106 is disposed between the flanges 114 of the frame 104 with the front side 142 of the face plate 106 being substantially flush with an edge face of the flanges 114.

In one example, the patch panel 100 includes a plurality of the face plates 106 (e.g., 2 or more face plates), where each face plate 106 includes a plurality of the second ports 140. In a non-limiting example, the patch panel 100 includes four (4) face plates 106A, 106B, 106C, 106D, where each of the face plates 106 includes six (6) second ports 140. While the face plates 106A, 106B, 106C, 106D are the same, the face plates 106 may have different lengths and/or different number of ports 110. In a non-limiting example, two face plates, each having 12 of the second ports 140 may be used with the frame 104. In another example, one face plate having 12 of the second ports 140 and two plates, each having six (6) of second ports 140 may be used with the frame 104. In one example, the total number of first ports 110 provided on the frame 104 should be equal to a total number of second ports 140 formed on all of the face plates 106 employed by the patch panel 100.

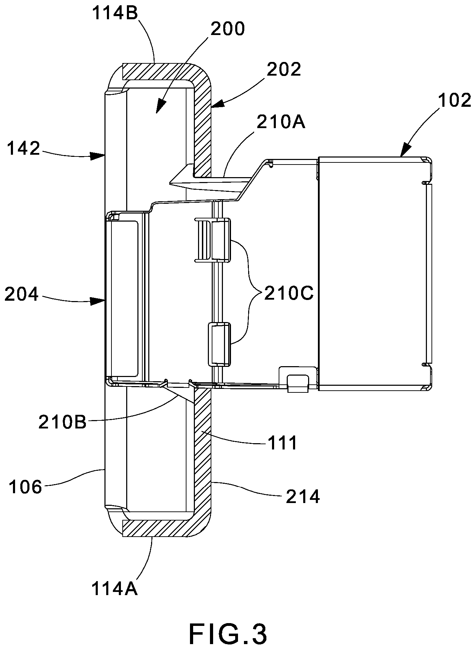

The plurality of second ports 140 of the face plate 106 align with the plurality of first ports 110 of the frame 104 forming the plurality of port modules 108 that receive and support the cable connector 102. More specifically, referring to FIG. 3, together the frame 104 and the face plate 106 define a gap 200 therebetween. The cable connector 102 is received from a back side 202 of the frame 104 to extend through the planar member 111 of the frame 104 and into the gap 200. With a portion of the cable connector 102 extending in the gap 200, a front face 204 of the cable connector 102 aligns with the front side 142 of the face plate 106 (i.e., the front face 204 of the cable connector 102 may extend slightly passed or may be flush with the front side 142 of the face plate 106).

In one example, to retain and/or reduce movement, the cable connector 102 generally includes one or more alignment-stop features, such as a snap-in tab 210A that is configured to compress to enter the first port 110. In a non-limiting example, to insert the cable connector 102, the connector 102 is angled into the first port 110 until the tab 210B passes the first port 110, and then the connector 102 is angled down depressing the snap-in tab 210A allowing the snap-in tab 210A to pass the first port 110. Once the tab 210A passes the first port 110, the tab 210A expands to contact a front side 214 of the frame 104 inhibiting the cable connector 102 from falling out of the port module 108. In addition to the snap-in tab 210A, the cable connectors 102 may also include a tab 210B, which is fixed, and/or one or more protrusion 210C on the sides of the cable connectors 102, where the protrusions 210C are configured to align and/or interact with the sides of the first port 110. In one example, the first port 110 is configured to contact at least one side of the cable connector 102 to electrically ground the cable connector 102 (e.g., the first port 110 contacts the protrusion 210C).

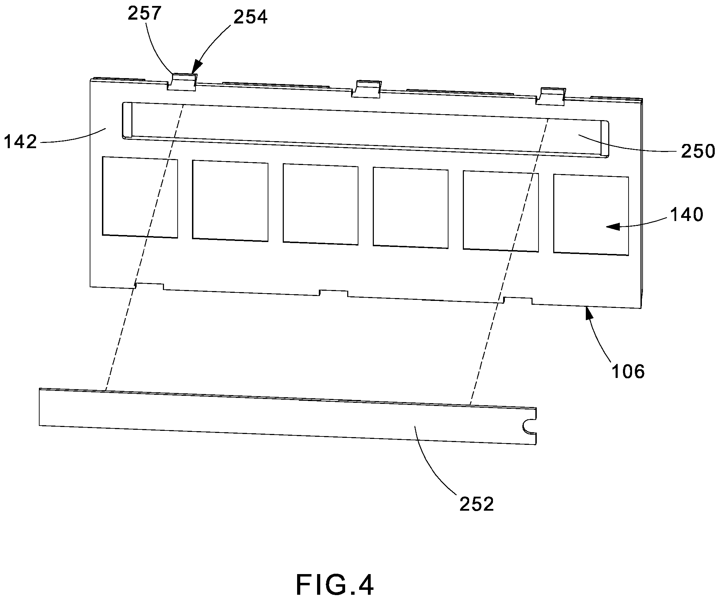

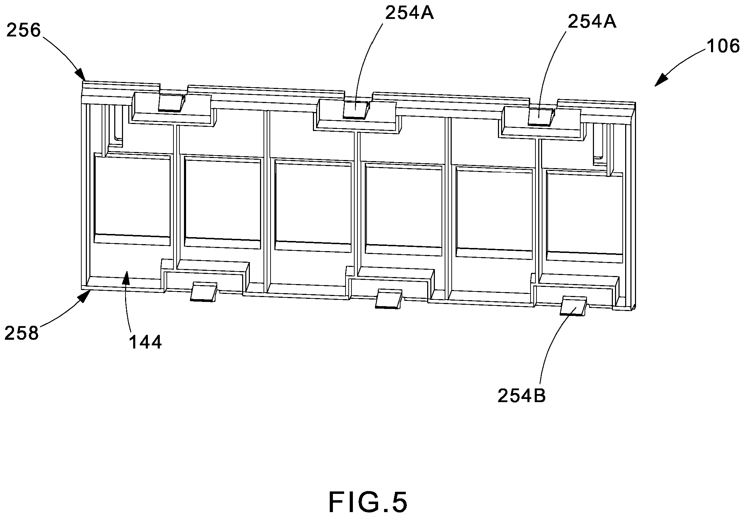

In one example, referring back to FIGS. 1 and 2, and with additional reference to FIGS. 4 and 5, the face plate 106 is a front display or, stated differently, an aesthetic cover of the patch panel 100. The front side 142 includes a slot 250 that is configured to accommodate an identification marker 252 (e.g., a label) that may be used to identify the plurality of port modules 108.

The face plate 106 is configured to attach to the frame 104 using snap-fit joints. More particularly, in one example, the face plate 106 includes a set of fastening tabs 254A and 254B (collectively "fastening tabs 254" or "set of fastening tabs 254") at an upper portion 256 and lower portion 258 of the face plate 106, respectively. The fastening tabs 254 extend from the back side 144 of the face plate 106 away from the front side 142. In one example, using known snap-fit design techniques, the set of fastening tabs 254 and the set of fastening slots 120 are configured to form a snap-fit joint. In a non-limiting example, each of the fastening tabs 254 includes a bump or protrusion 257 that deflects when being inserted into the slot 120, and then releases to catch on an edge of frame 104 that forms the slot 120. In one example, like the fastening slots 120A and 120B, the set of fastening tabs 254A and 254B are staggered or offset and do not align along the Y-axis of the X-Y-Z coordinate system (i.e., a selected fastening tab 254A is not over a fastening tab 254B). When installing the face plate 106 and the frame 104 together, the fastening slots 120A engage with the fastening tabs 254A and the fastening slots 120B engage with the fastening tabs 254B to form the snap-fit joints and to have the face plate 106 in the correct orientation.

While each face plate 106 is illustrated with six (6) fastening tabs 254, the face plate 106 may have two or more fastening tabs 254 and the number of fastening tabs 254 provided at the upper portion 256 and the lower portion 258 may be different. It should be readily understood that the number and/or placement of the fastening tabs 254 affects the number and/or placement of the fastening slots 120 on the frame 104.

With the snap-fit joints, the face plate 106, which is generally viewed by a user, may be adapted to provide an aesthetically pleasing feature. In addition, the frame 104 and the face plate 106 are secured to one another without additional fastening devices, such as screws, bolts, etc. Furthermore, using known techniques, the snap-fit joints may have a detachable design element such that the frame 104 and the face plate 106 may be attached and detached from one another.

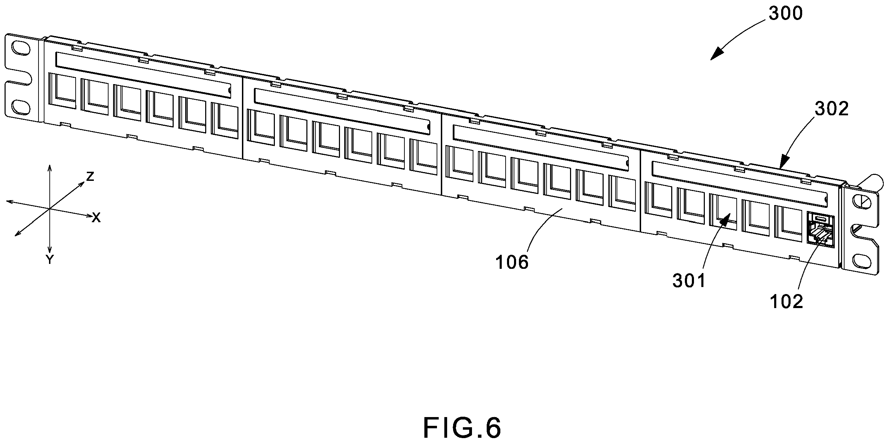

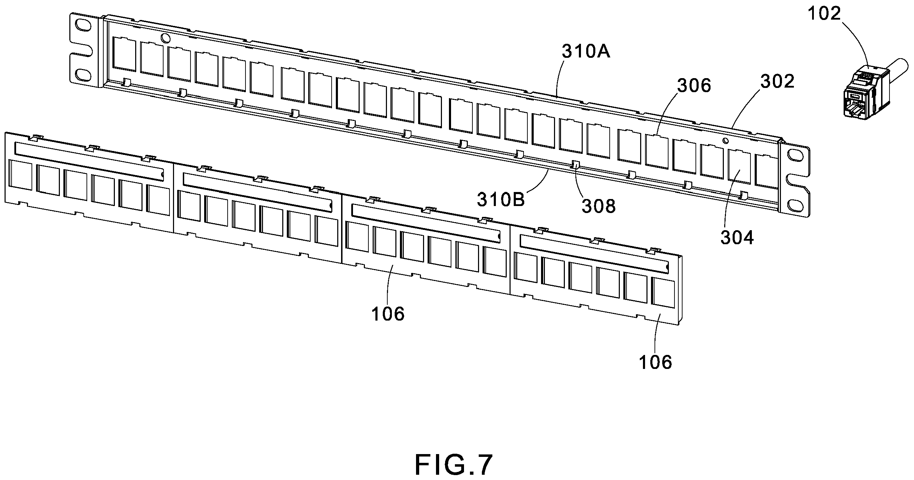

In lieu of the angled frame 104, the patch panel 100 may have a straight or, stated differently, a flat frame. Specifically, referring to FIGS. 6 and 7, a patch panel 300 defines a plurality of port modules 301, and includes a frame 302 that is straight to substantially lie in a two dimensional plane (e.g., X-Y plane or an X-Y-Z orthogonal coordinate system). Other than the structure, the frame 302 includes similar features as the frame 104, such as, a plurality of first ports 304 having grooves 306 that are similar to the first ports 110 having grooves 112; a plurality of fastening slots 308 that are similar to the fastening slots 120; and flanges 310A and 310B that are similar to the flanges 114A and 114B.

In one example, the patch panel 300 further includes the face plates 106. That is, the face plates 106 can be the same as those used with the angled patch panel 100. In addition, the face plates 106 engage with frame 302 using the snap-fit joints used in the patch panel 100, details of which are provided above. It should be readily understood that details and variations of the face plates 106 described above are also applicable to the patch panel 300.

Together, the face plates 106 and the frame 302 form the port modules 301 to receive the cable connector 102. The port module 301 is configured to retain the cable connector 102 in a similar manner as that of the port modules 108 of the patch panel 100, details of which are provided above.

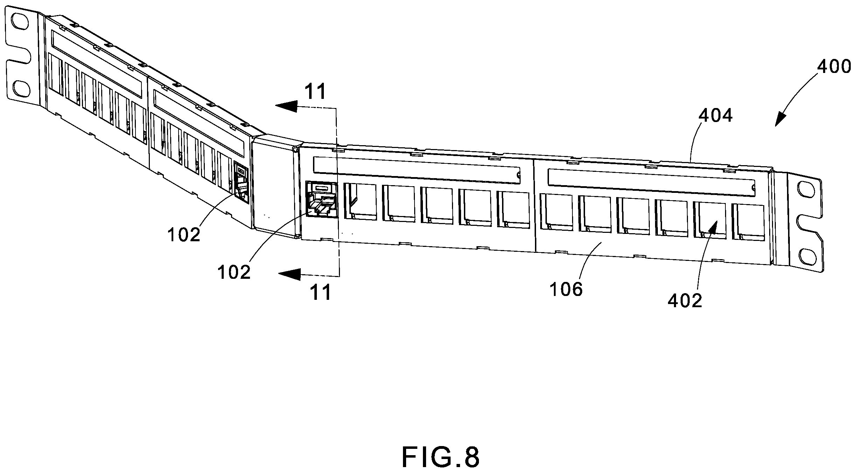

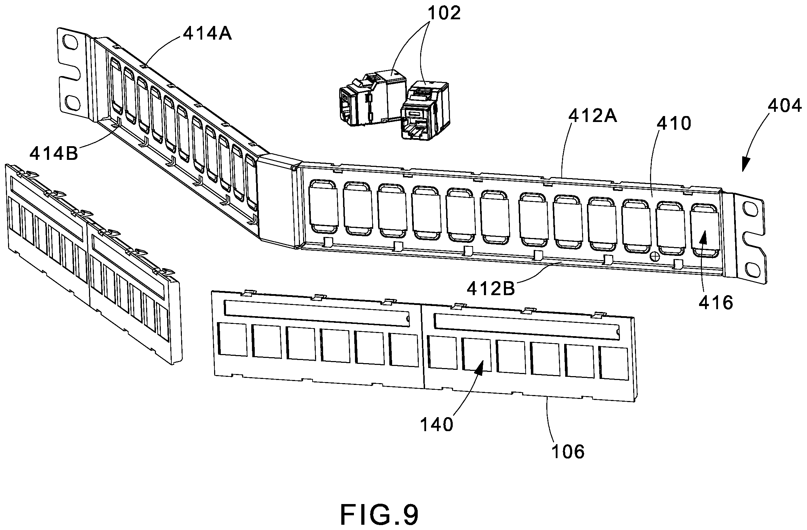

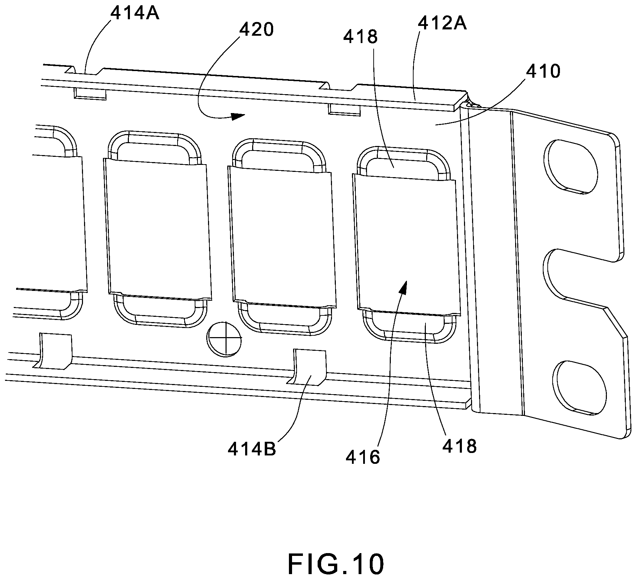

In one example, a patch panel may be configured to be made of less material than that of the patch panel 100 by making the frame thinner and implementing additional features to assist in retaining and supporting the cable connector 102. More particularly, referring to FIGS. 8 to 11, a patch panel 400 defines a plurality of port modules 402 to receive a plurality of the cable connectors 102, and includes a frame 404 and one or more of the face plates 106.

The frame 404 is similar to the frame 104 by including a planar member 410 and flanges 412A and 412B (collectively "flanges 412"), which are similar to the planar member 111 and the flanges 114, details of which are provided above. In addition, the frame 104 further defines a set of fastening slots 414A and 414B (collectively "fastening slots 414" or "set of fastening slots 414"), which are similar to the fastening slots 120A and 120B, details of which are provided above.

Like the patch panel 100, the face plate 106 and the frame 404 are configured to attach to each other using snap-fit joints formed by the fastening tabs 254 and the fastening slots 414. In the interest of brevity, details regarding the snap-fit joints between the face plate 106 and the frame 404 is omitted, and reference is made to the description above related to the snap-fit joints between the face plate 106 and the frame 104.

The frame 404 defines a plurality of first ports 416 and has a dimple 418 at each of the first ports 416. In one example, the dimple 418 forms a raised surface at a front side 420 of the frame 404 that faces the face plate 106 and an indented surface at a back side 422 of the frame 404 opposite of the front side 420.

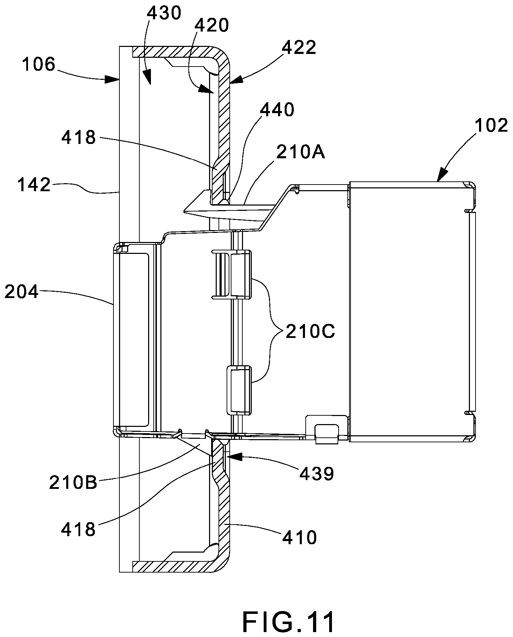

The plurality of second ports 140 of the face plate 106 align with the plurality of first ports 416 of the frame 404 forming the plurality of port modules 402 that receive and support the cable connectors 102. More specifically, as illustrated in FIG. 11, together, the frame 404 and the face plate 106 define a gap 430 therebetween. The cable connector 102 is received from the back side 422 of the frame 104 to extend through the planar member 410 of the frame 104 and into the gap 430. With a portion of the cable connector 102 extending in the gap 200, the front face 204 of the cable connector 102 aligns with the front side 142 of the face plate 106 (i.e., the front face 204 of the cable connector 102 may extend slightly passed or may be flush with the front side 142 of the face plate 106).

In one example, to retain and/or reduce movement of the cable connector 102, the snap-in tab 210A and 210B engages with the dimple 418. Specifically, in a non-limiting example, to insert the cable connector 102, the connector 102 is angled into the first port 416 until the tab 210B passes the first port 416, and then the connector 102 is angled down depressing the snap-in tab 210A allowing the snap-in tab 210A to pass the first port 416. Once passing the dimple 418, the snap-in tab 210A expands to contact the dimple 418 (i.e., snap-in tabs 210A and fixed tab 210B contact the raised surface at the front side 420 of the frame 404) inhibiting the cable connector 102 from falling out of the port module 108. In addition, the dimple 418 extends position of the front side 420 of the frame 404 creating a space 439 at the back side 422 of the frame 404. The space 439 aligns the sides of the first port 416 to a defined position to have the protrusions 210C engage or interface with the sides of the first port 416. Accordingly, with the thinner frame 404, the cable connector 102 may be supported by the patch panel 400.

In some variations, the dimples 418 have a chamfered edge 440 to ease entry of the cable connector 102 into the port module 402. For example, the chamfered edge 440 contacts the snap-fit tab 210A to provide a graduated bend of the tab 210A before insertion into the gap 438.

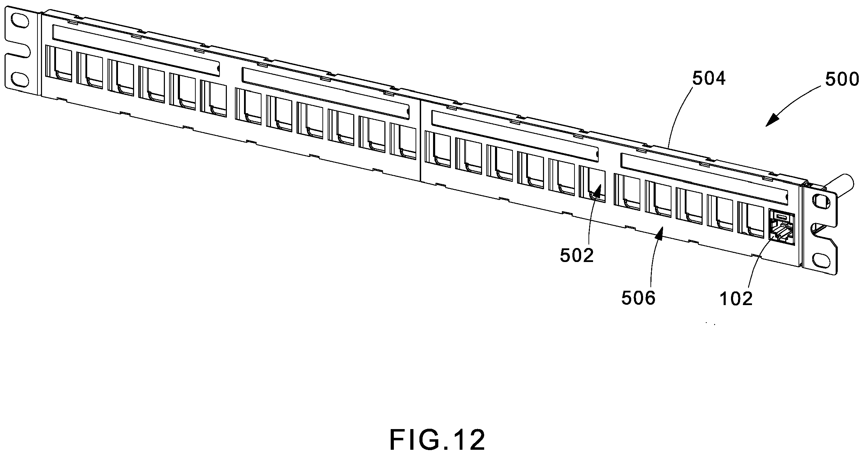

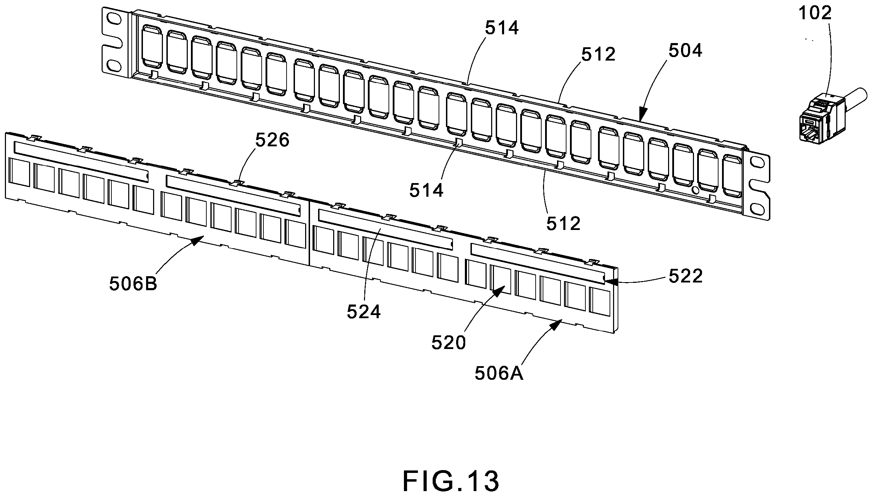

Like the patch panel 100, the patch panel 400 may also be provided with a straight body, similar to the patch panel 300. In a non-limiting example, FIGS. 12 and 13 illustrate a patch panel 500 defining a plurality of port modules 502 and including a frame 504 and face plates 506. The frame 504 is similar to the frame 302, with the only difference being that the frame 504 has a straight body, similar to the frame 302. Accordingly, the first ports 416, flanges 412, and the set of fastening slots 414 are similar to a plurality of ports 510, flanges 512, and the set of fastening slots 514.

In lieu of having four of the face plates 106, the patch panel 500 has two of the face plates 506 (i.e., face plates 506A and 506B in FIG. 13), where each face plate 506 defines twelve (12) secondary ports 520. The face plate 506 has similar features as that of the face plate 106. In a non-limiting example, the slot 250 accommodating the identification marker 252 is similar to a slot 522 accommodating an identification marker 524; and the set of fastening tabs 254 is similar to a set of fastening tabs 526 to secure to the frame 504 via the set of fastening slots 514. Accordingly, details regarding the various features of the face plate 506 is omitted for purposes of brevity, and instead, reference is made to the description above as it relates to the face plate 106.

Unless otherwise expressly indicated herein, all numerical values indicating mechanical/thermal properties, compositional percentages, dimensions and/or tolerances, or other characteristics are to be understood as modified by the word "about" or "approximately" in describing the scope of the present disclosure. This modification is desired for various reasons including industrial practice, material, manufacturing, and assembly tolerances, and testing capability.

As used herein, the phrase at least one of A, B, and C should be construed to mean a logical (A OR B OR C), using a non-exclusive logical OR, and should not be construed to mean "at least one of A, at least one of B, and at least one of C."

The description of the disclosure is merely exemplary in nature and, thus, variations that do not depart from the substance of the disclosure are intended to be within the scope of the disclosure. Such variations are not to be regarded as a departure from the scope of the disclosure.

Examples of the present disclosure are set out in the following numbered clauses:
1. A patch panel mountable to a network rack, comprising:
   a frame defining a set of fastening slots and a plurality of first ports; and
   a face plate defining a plurality of second ports and having a set of fastening tabs, wherein:
      the plurality of second ports of the face plate align with the plurality of first ports of the frame forming a plurality of port modules to receive and support a plurality of cable connectors, and
      the set of fastening tabs are engageable with the set of fastening slots.
2. The patch panel of clause 1, wherein the frame is made of metal.
3. The patch panel of clause 1, further comprising:
   a plurality of the face plates, wherein each of the face plates includes the plurality of first ports, and
   a total number of the plurality of first ports is equal to a total number of the plurality of second ports from all of the plurality of the face plates.
4. The patch panel of clause 1, wherein the frame has a first section and a second section angled relative to the first section by an obtuse angle.
5. The patch panel of clause 1, wherein the frame is straight.
6. The patch panel of clause 1, wherein the face plate includes an identification marker employed to identify the plurality of port modules at a front side of the face plate that faces away from the frame.
7. The patch panel of clause 1, wherein:
   the frame has a dimple at each of the plurality of first ports forming a raised surface at a front side of the frame that faces the face plate and an indented surface at a back side of the frame opposite of the front side, and
   the raised surface of the dimple supports one or more stop features of the cable connectors.
8. The patch panel of clause 7, wherein the dimple has a chamfered edge.
9. The patch panel of clause 1, wherein:
   the frame and the face plate define a gap therebetween, and
   a portion of the cable connectors extend in the gap and front faces of the cable connectors align with a front side of the face plate.
10. The patch panel of clause 1, wherein:
   the frame includes a first flange extending from an upper portion of the frame toward the face plate and a second flange extending from a lower portion of the frame toward the face plate opposing the first flange, and
   the face plate is arranged between the first flange and the second flange.
11. The patch panel of clause 1, wherein:
   the set of fastening tabs includes a first set of fastening tabs at an upper portion of the face plate and a second set of fastening tabs at a lower portion of the face plate and offset from the first set of fastening tabs, and
   the set of fastening slots includes a first set of fastening slots at an upper portion of the frame and a second set of fastening slots at a lower portion of the frame and offset from the first set of fastening slots.
12. The patch panel of clause 1, wherein the plurality of first ports define a plurality of grooves at upper portions of the first ports.
13. The patch panel of clause 1, wherein a first port among the plurality of first ports is configured to contact at least one side of a cable connector among the plurality of cable connectors to electrically ground the cable connector.
14. A patch panel mountable to a network rack, comprising:
   a frame defining a set of fastening slots and a plurality of first ports, the frame including a first flange extending from an upper portion of the frame and a second flange extending from a lower portion of the frame opposing the first flange; and
   a face plate defining a plurality of second ports and including a set of fastening tabs, wherein:
      the plurality of second ports of the face plate align with the plurality of first ports of the frame forming a plurality of port modules to receive and support a plurality of cable connectors,
      the first flange and the second flange extend toward the face plate, and the face plate is arranged between the first flange and the second flange, and
      the set of tabs are engageable with the set of fastening slots of the frame.
15. The patch panel of clause 14, wherein:
   the set of fastening tabs includes a first set of fastening tabs at an upper portion of the face plate and a second set of fastening tabs at a lower portion of the face plate and offset from the first set of fastening tabs, and
   the set of fastening slots includes a first set of fastening slots at an upper portion of the frame and a second set of fastening slots at a lower portion of the frame and offset from the first set of fastening slots.
16. The patch panel of clause 14, further comprising:
   a plurality of the face plates, wherein each of the face plates includes the plurality of first ports, and
   a total number of the plurality of first ports is equal to a total number of the plurality of second ports from all of the plurality of the face plates.
17. The patch panel of clause 14, wherein the frame has a first section and a second section angled relative to the first section by an obtuse angle.
18. The patch panel of clause 14, wherein the frame is straight.
19. The patch panel of clause 14, wherein the face plate includes an identification marker employed to identify the plurality of port modules at a front side of the face plate that faces away from the frame.
20. The patch panel of clause 14, wherein:
   the frame has a dimple at each of the plurality of first ports forming a raised surface at a front side of the frame that faces the face plate and an indented surface at a back side of the frame opposite of the front side, and
   the raised surface of the dimple supports one or more stop features of the cable connectors.
21. The patch panel of clause 14, wherein:
   the frame and the face plate define a gap therebetween, and
   portions of the cable connectors extend in the gap and front faces of the cable connectors align with a front side of the face plate.
22. A patch panel mountable to a network rack, comprising:
   a frame defining a set of fastening slots and a plurality of first ports, the frame including a first flange extending from an upper portion of the frame and a second flange extending from a lower portion of the frame opposing the first flange, wherein the set of fastening slots are defined at the upper portion and the lower portion of the frame; and
   a face plate defining a plurality of second ports and including a set of fastening tabs, wherein:
      the set of fastening tabs includes a first set of fastening tabs at an upper portion of the face plate and a second set of fastening tabs at a lower portion of the face plate and offset from the first set of fastening tabs,
      the set of fastening slots includes a first set of fastening slots at an upper portion of the frame and a second set of fastening slots at a lower portion of the frame and offset from the first set of fastening slots,
      the set of tabs are engageable with the set of fastening slots of the frame,
      the first flange and the second flange extend toward the face plate, and the face plate is arranged between the first flange and the second flange of the frame,
      with the face plate attached to the frame,
         the face plate and the frame define a gap therebetween, and
         the plurality of second ports of the face plate align with the plurality of first ports of the frame forming a plurality of port modules to receive a plurality of cable connectors, wherein portions of the cable connectors extend in the gap with front faces of the cable connectors align with a front side of the face plate.
23. The patch panel of clause 22, further comprising:
   a plurality of the face plates, wherein each of the face plates includes the plurality of first ports, and
   a total number of the plurality of first ports is equal to a total number of the plurality of second ports from all of the plurality of the face plates.

## Claims

1. A patch panel mountable to a network rack, comprising:
a frame defining a set of fastening slots and a plurality of first ports; and
a face plate defining a plurality of second ports and having a set of fastening tabs, wherein:
the plurality of second ports of the face plate align with the plurality of first ports of the frame forming a plurality of port modules to receive and support a plurality of cable connectors, and
the set of fastening tabs are engageable with the set of fastening slots.

2. The patch panel of claim 1, wherein the frame is made of metal.

3. The patch panel of claim 1 or claim 2, further comprising:
a plurality of the face plates, wherein each of the face plates includes the plurality of first ports, and
a total number of the plurality of first ports is equal to a total number of the plurality of second ports from all of the plurality of the face plates.

4. The patch panel of any preceding claim, wherein the frame has a first section and a second section angled relative to the first section by an obtuse angle.

5. The patch panel of any of claims 1 to 3, wherein the frame is straight.

6. The patch panel of any preceding claim, wherein the face plate includes an identification marker employed to identify the plurality of port modules at a front side of the face plate that faces away from the frame.

7. The patch panel of any preceding claim, wherein:
the frame has a dimple at each of the plurality of first ports forming a raised surface at a front side of the frame that faces the face plate and an indented surface at a back side of the frame opposite of the front side, and
the raised surface of the dimple supports one or more stop features of the cable connectors.

8. The patch panel of claim 7, wherein the dimple has a chamfered edge.

9. The patch panel of any preceding claim, wherein:
the frame and the face plate define a gap therebetween, and
a portion of the cable connectors extend in the gap and front faces of the cable connectors align with a front side of the face plate.

10. The patch panel of any preceding claim, wherein:
the frame includes a first flange extending from an upper portion of the frame toward the face plate and a second flange extending from a lower portion of the frame toward the face plate opposing the first flange, and
the face plate is arranged between the first flange and the second flange.

11. The patch panel of any preceding claim, wherein:
the set of fastening tabs includes a first set of fastening tabs at an upper portion of the face plate and a second set of fastening tabs at a lower portion of the face plate and offset from the first set of fastening tabs, and
the set of fastening slots includes a first set of fastening slots at an upper portion of the frame and a second set of fastening slots at a lower portion of the frame and offset from the first set of fastening slots.

12. The patch panel of any preceding claim, wherein the plurality of first ports define a plurality of grooves at upper portions of the first ports.

13. The patch panel of any preceding claim, wherein a first port among the plurality of first ports is configured to contact at least one side of a cable connector among the plurality of cable connectors to electrically ground the cable connector.

14. A patch panel mountable to a network rack, comprising:
a frame defining a set of fastening slots and a plurality of first ports, the frame including a first flange extending from an upper portion of the frame and a second flange extending from a lower portion of the frame opposing the first flange, wherein the set of fastening slots are defined at the upper portion and the lower portion of the frame; and
a face plate defining a plurality of second ports and including a set of fastening tabs, wherein:
the set of fastening tabs includes a first set of fastening tabs at an upper portion of the face plate and a second set of fastening tabs at a lower portion of the face plate and offset from the first set of fastening tabs,
the set of fastening slots includes a first set of fastening slots at an upper portion of the frame and a second set of fastening slots at a lower portion of the frame and offset from the first set of fastening slots,
the set of tabs are engageable with the set of fastening slots of the frame,
the first flange and the second flange extend toward the face plate, and the face plate is arranged between the first flange and the second flange of the frame,
with the face plate attached to the frame,
the face plate and the frame define a gap therebetween, and
the plurality of second ports of the face plate align with the plurality of first ports of the frame forming a plurality of port modules to receive a plurality of cable connectors, wherein portions of the cable connectors extend in the gap with front faces of the cable connectors align with a front side of the face plate.

15. The patch panel of claim 14, further comprising:
a plurality of the face plates, wherein each of the face plates includes the plurality of first ports, and
a total number of the plurality of first ports is equal to a total number of the plurality of second ports from all of the plurality of the face plates.
